Europäisches Patentamt

European Patent Office

Office européen des brevets

(19)

(11) **EP 0 783 109 B1**

(12)

# FASCICULE DE BREVET EUROPEEN

(45) Date de publication et mention
de la délivrance du brevet:
**30.05.2001 Bulletin 2001/22**

(51) Int Cl.⁷: **G01P 15/125**

(21) Numéro de dépôt: **96402871.6**

(22) Date de dépôt: **23.12.1996**

(54) **Dispositif de mesure d'une force à l'aide d'un capteur capacitif**

Kraftmessvorrichtung mit kapazitivem Geber

Force measuring device with capacitive pick-up

(84) Etats contractants désignés:
**CH DE ES FR GB IT LI NL**

(30) Priorité: **26.12.1995 FR 9515476**

(43) Date de publication de la demande:
**09.07.1997 Bulletin 1997/28**

(73) Titulaire: **C.S.E.M. CENTRE SUISSE
D'ELECTRONIQUE ET DE MICROTECHNIQUE
SA
2007 Neuchâtel (CH)**

(72) Inventeur: **Le Révérend, Rémi
2000 Neuchatel (CH)**

(74) Mandataire: **Caron, Gérard et al
CABINET DE BOISSE,
L.A. DE BOISSE - J.P. COLAS,
37 avenue Franklin D. Roosevelt
75008 Paris (FR)**

(56) Documents cités:
**FR-A- 2 706 038          FR-A- 2 720 510**

• **SENSORS AND ACTUATORS, vol. A21-A23,
1990, LAUSANNE CH, pages 278-281,
XP002013866 H.LEUTHOLD ET AL.: "An ASIC for
High-resolution Capacitive
Microaccelerometers"**

EP 0 783 109 B1

## Description

La présente invention est relative à un dispositif de mesure à capteur capacitif tel que par exemple un dispositif de mesure d'une force et notamment d'une force d'inertie correspondant à une accélération du dispositif.

Un tel dispositif de mesure a été décrit notamment dans la demande de brevet français n° 94 06 387 (FR-A-2 720 510) au nom du Demandeur de la présente demande de brevet.

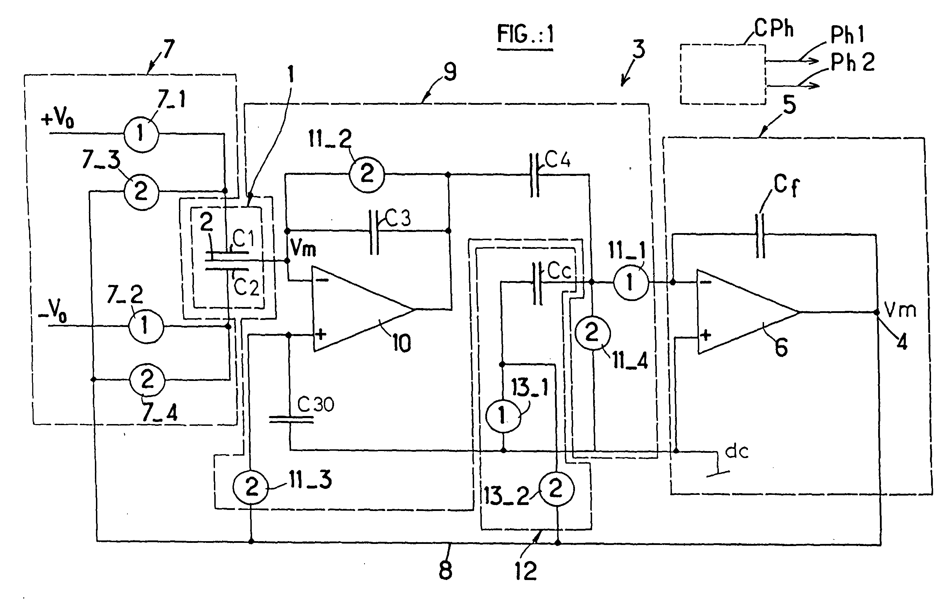

La figure 1 des dessins annexés représente un schéma de ce dispositif de mesure connu. Il comporte essentiellement un capteur capacitif 1 dans lequel une lame conductrice 2 suspendue élastiquement forme une armature commune à deux condensateurs $C_1$ et $C_2$. Cette lame est destinée à se déplacer sous l'influence d'une force dont il s'agit de connaître l'intensité, ce déplacement faisant varier les capacités des deux condensateurs. Le capteur capacitif ainsi agencé est connecté à un circuit d'interface 3 dont la sortie 4 produit une tension qui est fonction des capacités des deux condensateurs $C_1$ et $C_2$ et qui représente donc la position de la lame mobile et par voie de conséquence l'intensité recherchée de la force.

Le circuit d'interface 3 ajuste en permanence le potentiel de la lame mobile 2, appelé potentiel $V_m$, de telle manière que tout écoulement de charges dans cette lame soit annulé pour la mesure. Il y a donc un équilibrage de charges, qualificatif qui est communément donné à ce genre de dispositif de mesure (dont la dénomination anglaise est "charge balancing device").

Le circuit d'interface 3 comprend un bloc d'intégration 5 avec un condensateur $C_f$ coopérant avec un amplificateur opérationnel 6. Ce bloc d'intégration fournit en permanence à sa sortie 4 le potentiel $V_m$ égal à l'intégrale des charges fournies à son entrée par les blocs de circuit qui lui sont connectés en amont.

Le fonctionnement du circuit d'interface 3 est cyclique en ce sens qu'il se divise en deux phases qui se répètent en permanence. Ces phases sont désignées par "phase 1" et "phase 2" dans la suite de la description. L'enchaînement de ces phases est commandé par des signaux d'horloge pouvant présenter un premier état $Ph_1$ et un deuxième état $Ph_2$. Ils sont engendrés par un générateur de commande de phases Cph qui les applique à des interrupteurs de préférence du type transistorisé. Ceux-ci sont fermés selon le cas pendant l'une des phases 1 ou 2 et ouverts pendant la phase opposée. Sur les figures des dessins annexés, ces interrupteurs sont désignés par des cercles contenant un 1 ou un 2 selon qu'ils sont fermés pendant la phase 1 ou la phase 2 respectivement sous l'action des signaux $Ph_1$ et $Ph_2$.

Ceci étant précisé, on voit que le circuit d'interface 3 comprend en outre un bloc de commutation 7 comportant des interrupteurs 7-1 à 7-4 agencés de telle façon que pendant la phase 1, les armatures fixes des deux condensateurs $C_1$ et $C_2$ sont portées respectivement à des potentiels d'alimentation $V_0$ et $-V_0$, tandis que pendant la phase 2, ces armatures et la lame fixe des condensateurs $C_1$ et $C_2$ sont au même potentiel $V_m$ ramené de la sortie 4 sur les interrupteurs 7-3 et 7-4 par une connexion 8. Les potentiels d'alimentation $V_0$ et $-V_0$ sont symétriques par rapport à un potentiel d'alimentation dc qui sert de référence au potentiel de sortie $V_m$.

Le circuit d'interface comprend encore un bloc de transfert de charges 9 comportant un condensateur $C_3$ dit "de mesure" et un amplificateur opérationnel 10 formant ensemble un intégrateur, deux condensateurs de transfert $C_{30}$ et $C_4$, ainsi que des interrupteurs 11-1 à 11-4, l'interrupteur 11-1 étant fermé pendant la phase 1 et les trois autres pendant la phase 2.

Ce circuit d'interface comporte enfin un bloc de compensation 12 destiné à assurer une diminution, voire l'annulation de l'influence des capacités parasites qui sont présentes dans le capteur 1. Ce bloc de compensation comprend un condensateur de compensation Ce et des interrupteurs 13-1 et 13-2 fermés respectivement pendant les phases 1 et 2.

Le fonctionnement de ce dispositif de mesure a été décrit en détail dans la demande de brevet précitée et on pourra donc s'y référer pour en connaître tous les détails. Il suffit de rappeler ici que le potentiel $V_m$ prend la forme:

$$V_m = \frac{C_1 - C_2 + Cp_1 - Cp_2}{C_1 + C_2 + Cp_1 + Cp_2 - \dfrac{C_3}{C_4} Cc} \; V_0 \tag{1}$$

dans laquelle les potentiels $V_m$ et $V_0$ sont respectivement ceux indiqués sur la figure 1 et les capacités $C_1$ et $C_2$ celles des condensateurs y ayant des désignations identiques, tandis que $Cp_1$ et $Cp_2$ sont les valeurs des capacités parasites du capteur 1.

Le montage qui vient d'être décrit brièvement ci-dessus permet de compenser l'effet des capacités parasites du capteur 1.

Cependant, il s'est avéré que la présence des capacités parasites n'est pas le seul facteur qui perturbe le fonctionnement du dispositif de mesure et qu'en les compensant, on n'élimine pas un autre effet perturbateur qui est celui des résistances de fuite présentes aux bornes des condensateurs $C_1$ et $C_2$ du capteur 1.

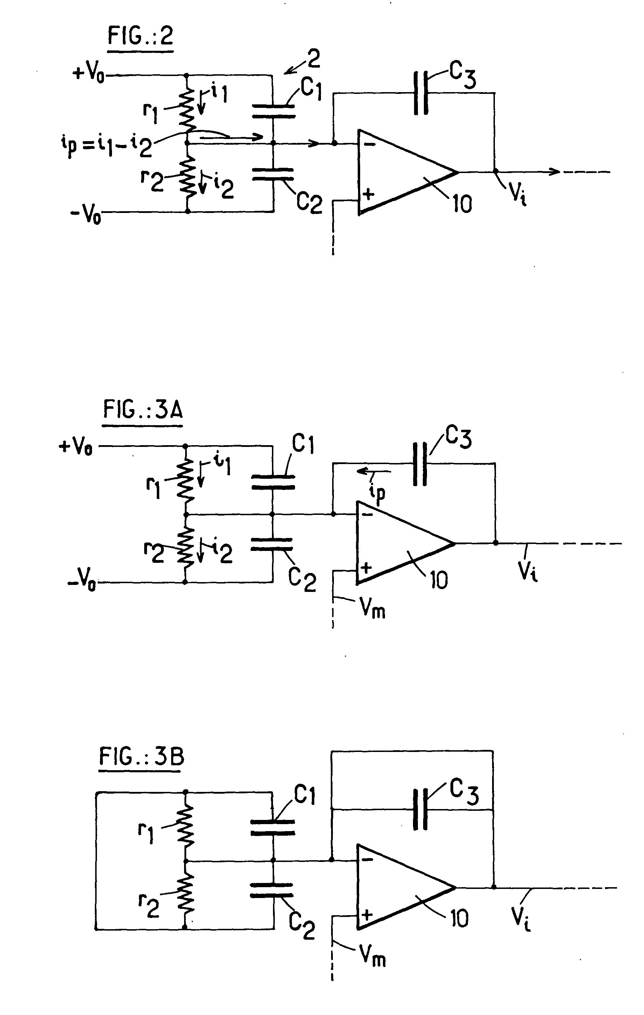

En effet, en considérant la figure 2 des dessins annexés, on voit qu'en réalité les condensateurs $C_1$ et $C_2$

sont respectivement en parallèle avec deux résistances parasites $r_1$ et $r_2$. Ces résistances peuvent conduire des courants $i_1$ et $i_2$ pendant la phase de mesure de telle sorte que les courants provenant des condensateurs $C_1$ et $C_2$ dus à leurs charges respectives et envoyés dans l'intégrateur formé par le condensateur $C_3$ et l'amplificateur 10, sont majorés d'un courant parasite $I_p$. Ce courant total est formé par la différence des courants $i_1$ et $i_2$ circulant respectivement dans les résistances $r_1$ et $r_2$.

Ce phénomène perturbateur est d'autant plus gênant que les valeurs absolues des résistances parasites ne sont pas connues et qu'elles sont par ailleurs fortement dépendantes de la température en variant de façon relativement aléatoire.

Les figures 3A et 3B représentent partiellement les blocs 7 et 9, ainsi que le capteur capacitif 1 de la figure 1, respectivement dans la phase 1 de précharge ou de mesure et dans la phase 2 de remise à zéro ou de décharge des condensateurs. On voit que dans la phase 2, les interrupteurs 7-3 et 7-4 court-circuitent non seulement les condensateurs du capteur 1, mais également les résistances parasites $r_1$ et $r_2$.

On peut montrer qu'en négligeant les résistances parasites $r_1$ et $r_2$, la tension $V_i$ apparaissant à la sortie de l'amplificateur 10 pourrait s'écrire:

$$V_i = V_m - \frac{1}{C_3} \{(C_1 - C_2)V_0 - (C_1 + C_2)V_m\} \tag{2}$$

En fait, les résistances $r_1$ et $r_2$ ont pour effet de modifier la tension $V_i$ d'une quantité:

$$\Delta V_i = \frac{\dfrac{(V_0 - V_m)}{r_1} - \dfrac{(V_m + V_0)}{r_2}}{C_3} \, T \tag{3}$$

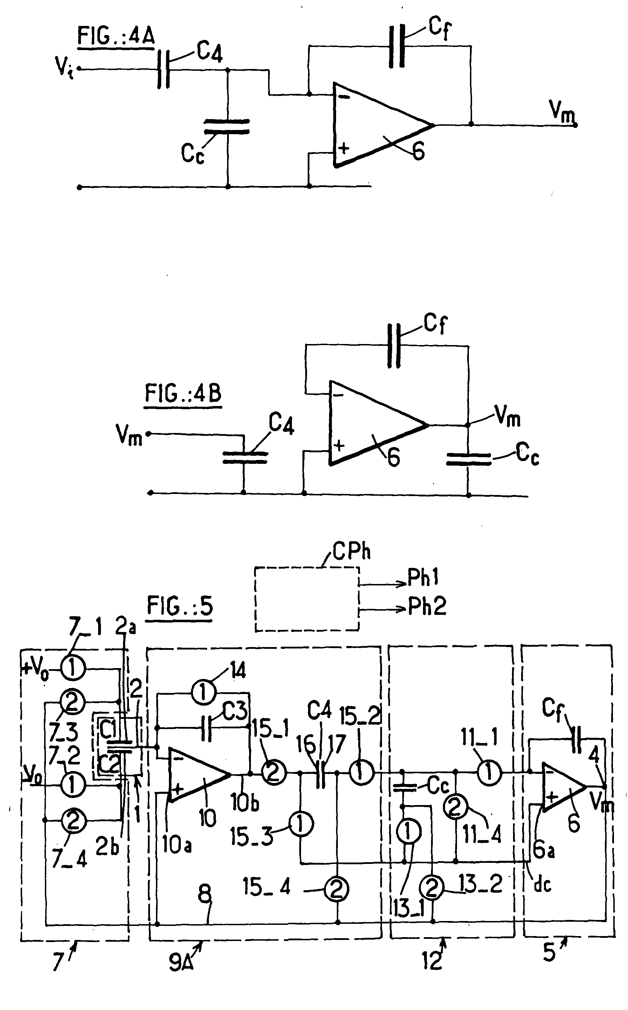

Les figures 4A et 4B montrent partiellement le bloc 9 connecté au bloc 5 respectivement pendant les phases 1 et 2. Dans la phase 1, le condensateur C4 est au potentiel $V_i$, tandis que pendant la phase 2, ce condensateur est au potentiel $V_m$, transmis sans modification par l'amplificateur 10.

La valeur de $V_m$ devient ainsi égale à:

$$V_m = \frac{C_1 - C_2 + \left(\dfrac{1}{r_1} - \dfrac{1}{r_2}\right).T + Cp_1 - Cp_2}{C_1 + C_2 - C_3\dfrac{C_c}{C_4} + \left(\dfrac{1}{r_1} + \dfrac{1}{r_2}\right).T + Cp_1 + Cp_2}.V_0 \tag{4}$$

On constate donc que le résultat de la mesure est entaché d'une erreur due à la présence des résistances parasites.

Un premier moyen pour réduire cette erreur consisterait à réduire le plus possible le temps d'intégration T, ou en d'autres termes, à augmenter la fréquence d'échantillonnage rythmant les exécutions successives des phases 1 et 2.

Cependant, une telle méthode ne serait pas avantageuse, car elle augmenterait excessivement la consommation du dispositif de mesure.

On pourrait également envisager d'augmenter artificiellement les résistances $r_1$ et $r_2$ afin de réduire autant que possible les courants parasites $i_1$ et $i_2$ (figure 2). Cette méthode conduirait cependant à une fabrication nettement plus complexe du capteur 2 avec pour conséquence un plus faible rendement de cette fabrication.

L'invention a pour but d'apporter une solution au problème de la réduction de l'influence des résistances parasites d'un capteur à équilibrage de charges sans passer par les méthodes désavantageuses énoncées ci-dessus.

L'invention a donc pour objet un dispositif de mesure d'une force et notamment d'une force d'inertie correspondant à une accélération, comprenant :

- un capteur capacitif comportant deux condensateurs, une première armature de chacun desdits condensateurs étant reliée électriquement aux mêmes premiers moyens de connexion, et des deuxièmes armatures desdits condensateurs étant reliées respectivement à des deuxièmes et des troisièmes moyens de connexion, ladite première armature d'au moins l'un desdits condensateurs étant en outre formée par une lame mobile suspendue élastiquement et étant susceptible d'être soumise à ladite force de manière à faire varier la capacité d'au moins l'un desdits condensateurs; et

- un circuit d'interface relié audit capteur capacitif pour fournir un potentiel de sortie représentatif de ladite force et comprenant:

- des moyens d'intégration répondant à des charges électriques en entrée pour engendrer, entre leur sortie et une source de potentiel de référence, ledit potentiel de sortie avec une valeur proportionnelle à la quantité totale desdites charges électriques en entrée;
- des moyens pour fournir au moins un signal de commande périodique présentant successivement un premier état dit de mesure et un deuxième état dit de transfert de charges;
- des moyens de liaison commutables répondant audit premier état du signal de commande pour porter lesdites deuxièmes armatures respectivement à un premier potentiel et à un deuxième potentiel symétrique dudit premier potentiel par rapport audit potentiel de référence, et répondant également audit deuxième état du signal de commande pour amener lesdites deuxièmes armatures au potentiel de ladite sortie des moyens d'intégration; et
- des moyens de transfert de charges comportant des moyens d'accumulation de charges qui, pendant l'un desdits états dudit signal de commande, transfèrent auxdits moyens d'intégration une quantité de charges représentative des charges présentes sur lesdites premières armatures, et qui, pendant l'autre des états dudit signal de commande, sont amenés à éliminer les charges qu'ils ont accumulées auparavant;

    caractérisé en ce que

- l'état pendant lequel lesdits moyens d'accumulation de charges sont amenés à éliminer leurs charges est le premier état dit de mesure du signal de commande, et en ce que
- lesdits moyens de transfert de charges comprennent également des moyens pour inverser le signe de ladite quantité de charges lorsqu'elle est transférée vers lesdits moyens d'intégration. Des modes de réalisation préférés sont l'objet des revendications dépendantes.

Il résulte de ces caractéristiques que la quantité de charges accumulée sur la lame mobile du capteur et significative d'une déviation de la lame mobile, est mesurée seulement par les moyens d'accumulation de charges des moyens de transfert, lorsque les condensateurs du capteur sont en court-circuit pour l'élimination des charges accumulées. De la sorte, pendant cette mesure, les courants parasites circulant dans les résistances présentes en parallèle sur ces condensateurs ne peuvent pas l'influencer. D'autre part, comme pendant l'autre état de fonctionnement du dispositif, les condensateurs du capteur accumulent leurs charges à l'aide des potentiels symétriques d'alimentation, ces résistances sont, certes, parcourues par des courants dus à ces potentiels symétriques, mais ces courants ne peuvent en aucun cas participer à cette accumulation. Grâce à l'invention, l'influence des résistances parasites est donc totalement éliminée.

D'autres caractéristiques et avantages de l'invention apparaîtront au cours de la description qui va suivre, donnée uniquement à titre d'exemple et faite en se référant aux dessins annexés sur lesquels:

- la figure 1 est un schéma, déjà décrit ci-dessus, d'un dispositif de mesure de force à capteur capacitif réalisé selon la technique antérieure;
- la figure 2 est un schéma partiel de ce dispositif de mesure antérieur, dans lequel on a montré la présence de résistances parasites qui en perturbent le fonctionnement;
- les figures 3A et 3B sont des schémas partiels de ce même dispositif de mesure antérieur respectivement lorsque les interrupteurs de phase 1 et de phase 2 sont fermés;
- les figures 4A et 4B sont des schémas partiels d'une autre partie du dispositif de mesure antérieur, dans les mêmes conditions que les figures 3A et 3B;
- la figure 5 est un schéma d'un dispositif de mesure à capteur capacitif selon l'invention;
- les figures 6A et 6B montrent, dans les mêmes conditions respectives que les figures 3A et 3B, un schéma du dispositif de mesure selon l'invention;
- la figure 7 est un schéma de l'un des amplificateurs opérationnels du dispositif de mesure selon l'invention, amplificateur qui est muni d'un circuit de compensation de son décalage intrinsèque.

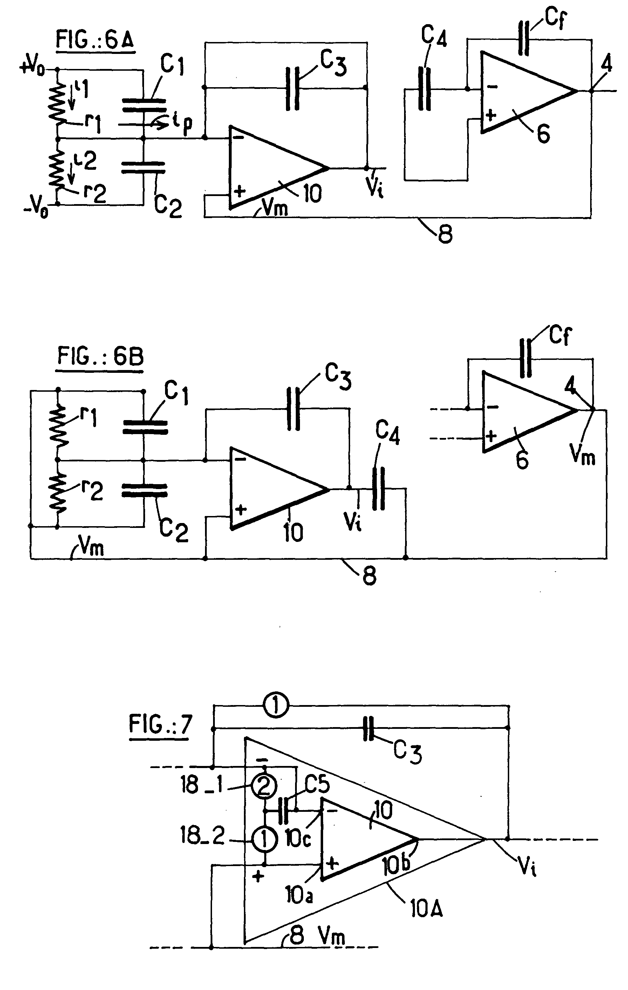

On va maintenant se référer à la figure 5 qui représente un mode de réalisation préféré du dispositif de mesure selon l'invention. Le schéma de ce dispositif est identique à celui de la figure 1 pour ce qui concerne le bloc de commutation 7, le capteur 1, le bloc de compensation 12 et le bloc d'intégration 5. En revanche, il en diffère selon l'invention par l'agencement du bloc de transfert de charges désigné ici par la référence 9A au lieu de 9.

Ce bloc de transfert de charges 9A comporte les éléments déjà décrite suivants: le condensateur de mesure $C_3$, le condensateur de transfert $C_4$, l'amplificateur opérationnel 10 et le générateur Cph engendrant les signaux de commande $Ph_1$ et $Ph_2$. Cependant, ces composants sont branchés différemment que dans le dispositif de mesure selon la technique antérieure.

En effet, on notera tout d'abord que le condensateur $C_3$ est connecté en parallèle à un interrupteur 14 qui, contrairement au schéma de la figure 1, est fermé pendant la phase 1 au lieu de l'être pendant la phase 2. Par ailleurs, l'entrée non inverseuse 10a de l'amplificateur opérationnel 10 est connectée directement à la connexion 8 et reçoit donc le signal de la sortie 4 (potentiel $V_m$) quelle que soit la phase dans laquelle se trouve le dispositif de mesure.

On notera en outre que le condensateur $C_4$ est associé à un jeu de quatre interrupteurs 15-1 à 15-4 connectés de la façon suivante. L'interrupteur 15-1, fermé pendant la phase 2, relie la sortie 10b de l'amplificateur 10 à l'une des armatures 16 du condensateur $C_4$. L'autre armature 17 de ce condensateur $C_4$ est reliée au condensateur $C_c$ par l'intermédiaire de l'interrupteur 15-2 fermé pendant la phase 1.

L'armature 16 du condensateur C4 est également connectée à l'interrupteur 15-3 fermé pendant la phase 1 et qui la relie pendant cette phase à l'entrée non-inverseuse 6a de l'amplificateur 6.

L'armature 17 est également connectée à l'interrupteur 15-4 fermé pendant la phase 2 et qui la relie à la connexion 8 pendant cette phase.

Les figures 6A et 6B montrent le dispositif de mesure selon l'invention respectivement pendant les phases 1 et 2 qui pour le commodité de la description sont dites respectivement "de mesure" et "de transfert de charges". Pour simplifier les figures, les interrupteurs et le bloc de compensation 12 ne sont pas représentés. En revanche, on a montré la connexion des résistances parasites $r_1$ et $r_2$, ainsi que les courants parasites $i_1$, $i_2$ et $i_p$ auxquels elles donnent naissance pendant le fonctionnement du dispositif de mesure.

Selon l'invention, les quantités de charges suivantes s'établissent respectivement sur les condensateurs $C_1$, $C_2$ et $C_3$:

pendant la phase 1 (figure 6A) :

$$Q_1 = C_1(V_0 - V_m)$$
$$Q_2 = C_2(-V_0 - V_m)$$
$$Q_3 = 0$$

et pendant la phase 2 (figure 6B) :

$$Q_1 = C_1.0 = 0$$
$$Q_2 = C_2.0 = 0$$
$$Q_3 = C_3 \cdot (V_i - V_m)$$

Ces équations de charges montrent que pendant l'une des phases (dans l'exemple décrit la phase 1), on effectue la mesure par l'intermédiaire des condensateurs $C_1$ et $C_2$, pendant que le condensateur $C_3$ est court-circuité. De ce fait, les charges dues aux courants parasites $i_1$ et $i_2$ circulant dans les résistances $r_1$ et $r_2$ ne peuvent pas s'accumuler sur le condensateur $C_3$ pendant la phase de mesure et elles ne sont donc pas prises en compte. Par ailleurs, les courants parasites sont également neutralisés pendant la phase de transfert de charges (ici la phase 2) du fait que les résistances parasites sont alors court-circuitées (figure 6B).

La figure 6A montre également que pendant la phase de mesure, la charge du condensateur $C_4$ est remise à zéro, car il est alors raccordé aux bornes d'entrée de l'amplificateur 6 qui sont au même potentiel.

Par contre, comme le montre la figure 6B, pendant la phase de transfert de charges, le condensateur $C_4$ accumule une quantité de charges $Q_4 = C_4 (V_i - V_m)$.

En procédant à un calcul analogue à celui aboutissant à l'équation (2), le potentiel $V_i$ devient:

$$V_i = V_m + \frac{1}{C_3} \{(C_1 - C_2)V_0 - (C_1 + C_2)V_m\} \tag{5}$$

dans laquelle le signe "-" de l'équation (2) est remplacé par le signe "+", tandis que, grâce à l'invention, on peut se dispenser de déduire de la valeur du potentiel $V_i$, une valeur $\Delta V_i$ due aux résistances parasites. Celles-ci n'ont donc plus aucune influence sur le résultat de la mesure.

L'inversion de signe dans l'équation (5) nécessite la présence des interrupteurs 15-1 à 15-4 qui permettent d'inverser le branchement du condensateur $C_4$, lorsque le montage passe d'une phase à l'autre.

Il convient de remarquer que, l'amplificateur 10 étant directement connecté à la connexion 8 par sa borne 10a, son décalage intrinsèque peut avoir une influence sur le résultat de la mesure. Il est donc recommandé, selon une autre caractéristique de l'invention, de prévoir un circuit de compensation de ce décalage. La figure 7 propose un mode de réalisation avantageux d'un tel circuit de compensation.

Sur cette figure 7, on voit que l'entrée inverseuse 10c de l'amplificateur opérationnel 10 est connectée à un

condensateur de compensation $C_5$ qui est monté en parallèle à un interrupteur 18-1 fermé pendant la phase 2. Ce condensateur est également connecté à un interrupteur 18-2 fermé pendant la phase 1 et connecté par ailleurs à l'entrée non inverseuse de l'amplificateur 10. Le tout forme un amplificateur opérationnel 10A à compensation de décalage dans lequel pendant la phase 1, le décalage est mesuré, tandis que pendant la phase 2, la valeur de ce décalage est soustraite du potentiel à l'entrée inverseuse 10b de l'amplificateur 10.

Il est encore à noter que les moyens décrits ci-dessus pour éliminer l'influence des résistances parasites du capteur capacitif 1 n'ont pas nécessairement à être combinés à ceux permettant de compenser l'influence des capacités parasites et matérialisés par le bloc de compensation 12. Si on considère que ce bloc n'est pas nécessaire, on peut raccorder directement (figure 5) l'interrupteur 15-2 à l'entrée inverseuse de l'amplificateur opérationnel 6.

**Revendications**

1. Dispositif de mesure d'une force et notamment d'une force d'inertie correspondant à une accélération, comprenant :

   - un capteur capacitif (1) comportant deux condensateurs ($C_1$, $C_2$), une première armature (2) de chacun desdits condensateurs étant reliée électriquement aux mêmes premiers moyens de connexion, et des deuxièmes armatures (2a, 2b) desdits condensateurs étant reliées respectivement à des deuxièmes et des troisièmes moyens de connexion, ladite première armature (2) d'au moins l'un desdits condensateurs étant en outre formée par une lame mobile suspendue élastiquement et étant susceptible d'être soumise à ladite force de manière à faire varier la capacité d'au moins l'un desdits condensateurs ($C_1$, $C_2$), et
   - un circuit d'interface (5, 7, 9A, 12) relié audit capteur capacitif (1) pour fournir un potentiel de sortie ($V_m$) représentatif de ladite force et comprenant:

   - des moyens d'intégration (5) répondant à des charges électriques en entrée pour engendrer, entre leur sortie (4) et une source de potentiel de référence (dc), ledit potentiel de sortie ($V_m$) avec une valeur proportionnelle à la quantité totale desdites charges électriques en entrée;
   - des moyens ($C_{ph}$) pour fournir au moins un signal de commande périodique ($Ph_1$, $Ph_2$) présentant successivement un premier état dit état de mesure et un deuxième état dit de transfert de charges;
   - des moyens de liaison commutables (7) répondant audit premier état du signal de commande pour porter lesdites deuxièmes armatures (2a, 2b) respectivement à un premier potentiel ($V_0$) et à un deuxième potentiel symétrique ($-V_0$) dudit premier potentiel ($V_0$) par rapport audit potentiel de référence (dc), et répondant également audit deuxième état du signal de commande pour amener lesdites deuxièmes armatures (2a, 2b) au potentiel de ladite sortie (4) des moyens d'intégration (5); et
   - des moyens de transfert de charges (9A) comportant des moyens d'accumulation de charges ($C_3$) qui, pendant l'un ($Ph_2$) desdits états dudit signal de commande, transfèrent auxdits moyens d'intégration (5) une quantité de charges représentative des charges présentes sur lesdites premières armatures (2), et qui, pendant l'autre ($Ph_1$) des états dudit signal de commande, sont amenés à éliminer les charges qu'ils ont accumulées auparavant;

   caractérisé en ce que

   - l'état pendant lequel lesdits moyens d'accumulation de charges ($C_3$) sont amenés à éliminer leurs charges est le premier état ($Ph_1$) dit de mesure du signal de commande, et en ce que
   - lesdits moyens de transfert de charges (9A) comprennent également des moyens ($C_4$, 15-1 à 15-4) pour inverser le signe de ladite quantité de charges lorsqu'elle est transférée vers lesdits moyens d'intégration (5).

2. Dispositif suivant la revendication 1, dans lequel lesdits moyens de transfert de charges (9A) comprennent un intégrateur (10, $C_3$) comportant un amplificateur opérationnel (10) dont l'entrée inverseuse est connectée à sa sortie (10b) par l'intermédiaire d'un condensateur de mesure ($C_3$), ainsi qu'un condensateur de transfert ($C_4$) reliant la sortie dudit amplificateur opérationnel (10) auxdits moyens d'intégration (5), caractérisé en ce que ledit condensateur de mesure ($C_3$) est shunté par un élément de commutation (14) le court-circuitant, pendant ledit premier état ($Ph_1$) du signal de commande et en ce que ledit condensateur de transfert ($C_4$) est connecté à une pluralité d'éléments de commutation (15-1 à 15-4) permettant de le connecter aux bornes d'entrée desdits moyens d'intégration (5) pendant le premier état ($Ph_1$) dudit signal de commande en l'isolant dudit intégrateur (10, $C_3$) des moyens de transfert (9A), et de le connecter entre ladite sortie (4) desdits moyens d'intégration (5) et la sortie (10b) de l'intégrateur desdits moyens de transfert (9A) pendant le deuxième état ($Ph_2$) dudit signal de commande.

**3.** Dispositif suivant la revendication 2, caractérisé en ce que lesdits moyens de transfert (9A) comportent également un condensateur de compensation de décalage ($C_5$) qui est relié à des éléments de commutation supplémentaires (18-1, 18-2) qui le relient aux entrées inverseuse et non inverseuse dudit amplificateur opérationnel (10), pendant le premier état ($Ph_1$) dudit signal de commande et qui le connectent en série avec ledit condensateur de mesure ($C_3$) pendant le deuxième état ($Ph_2$) dudit signal de commande.

**4.** Dispositif suivant la revendication 3, comportant en outre un élément de circuit de compensation (12) raccordé entre lesdits moyens de transfert (9A) et lesdits moyens d'intégration (5) pour compenser l'influence des capacités parasites inhérentes audit capteur (1), caractérisé en ce que ledit élément de compensation de charges comprend un condensateur (Ce) qui, pendant le premier état ($Ph_1$) dudit signal de commande, est raccordé en parallèle audit condensateur de transfert ($C_4$) avec une première polarité et qui, pendant le deuxième état ($Ph_2$) dudit signal de commande, est relié en parallèle à ce condensateur de transfert ($C_4$) avec la polarité inversée.

## Claims

**1.** A device for measuring a force and especially an inertial force corresponding to an acceleration, comprising:

- a capacitive sensor (1) including two capacitors ($C_1$, $C_2$), a first plate (2) of each of said capacitors being linked electrically to the same first connection means, and second plates (2a, 2b) of said capacitors being linked respectively to second and third connection means, said first plate (2) of at least one of said capacitors furthermore being formed by an elastically suspended movable flap and being able to be subjected to said force in such a way as to vary the capacitance of at least one of said capacitors ($C_1$, $C_2$) and,
- an interface circuit (5, 7, 9A, 12) linked to said capacitive sensor (1) so as to deliver an output potential ($V_m$) representative of said force and comprising:

- integration means (5) responding to electric charge at the input so as to generate, between their output (4) and a source of reference potential (dc), said output potential ($V_m$) with a value proportional to the total quantity of said electric charge at the input;
- means ($C_{ph}$) for delivering at least one periodic control signal ($Ph_1$, $Ph_2$) exhibiting in succession a first state referred to as the measuring state and a second so-called charge transfer state;
- switchable linking means (7) responding to said first state of the control signal so as to bring said second plates (2a, 2b) respectively to a first potential ($V_0$) and to a second potential ($-V_0$) symmetric with said first potential ($V_0$) with respect to said reference potential (dc), and also responding to said second state of the control signal so as to bring said second plates (2a, 2b) to the potential of said output (4) of the integration means (5); and
- charge transfer means (9A) including charge accumulation means ($C_3$) which, during one ($Ph_1$) of said states of said control signal, transfer to said integration means (5) a quantity of charge representative of the charge present on said first plates (2), and which, during the other ($Ph_2$) of the states of said control signal, are made to discard the charge which they have accumulated previously; wherein
- the state during which the charge accumulation means ($C_3$) are made to discard their charge is the first so-called measuring state ($Ph_1$) of the control signal, and wherein
- said charge transfer means (9A) also comprise means ($C_4$, 15-1 to 15-4) for reversing the sign of said quantity of charge when the latter is transferred to said integration means (5).

**2.** The device as claimed in claim 1, wherein said charge transfer means (9A) comprise a charge amplifier (10, $C_3$) including an operational amplifier (10) whose inverting input is connected to its output (10b) by way of a measuring capacitor ($C_3$), as well as a transfer capacitor ($C_4$) linking the output of said operational amplifier (10) to said integration means (5), wherein said measuring capacitor ($C_3$) is shunted by a switching element (14) short-circuiting it, during said first state ($Ph_1$) of the control signal and wherein said transfer capacitor ($C_4$) is connected to a plurality of switching elements (15-1 to 15-4) for connecting it to the input terminals of said integration means (5) during the first state ($Ph_1$) of said control signal while isolating it from said integrator (10, $C_3$) of the transfer means (9A), and for connecting it between said output (4) of said integration means (5) and the output (10b) of the integrator of said transfer means (9A) during the second state ($Ph_2$) of said control signal.

**3.** The device as claimed in claim 2, wherein said transfer means (9A) also include an offset compensation capacitor ($C_5$) which is linked to additional switching elements (18-1, 18-2) which link it to the inverting and non-inverting inputs of said operational amplifier (10), during the first state ($Ph_1$) of said control signal and which connect it in series with said measuring capacitor ($C_3$) during the second state ($Ph_2$) of said control signal.

**4.** The device as claimed in claim 3, furthermore including a compensation circuit element (12) connected between said transfer means (9A) and said integration means (5) so as to compensate for the influence of the inherent stray capacitances of said sensor (1), wherein said charge compensation element comprises a capacitor ($C_C$) which, during the first state ($Ph_1$) of said control signal, is connected in parallel to said transfer capacitor ($C_4$) with a first polarity and which, during the second state ($Ph_2$) of said control signal, is linked in parallel with this transfer capacitor ($C_4$) with the reverse polarity.

**Patentansprüche**

**1.** Vorrichtung zum Messen einer Kraft und insbesondere einer Trägheitskraft entsprechend einer Beschleunigung mit:

- einem kapazitiven Aufnehmer (1), der zwei Kondensatoren ($C_1$, $C_2$) aufweist, wobei ein erster Belag (2) jedes der Kondensatoren elektrisch mit denselben ersten Verbindungsmitteln verbunden ist und zweite Kondensatoren mit zweiten bzw. dritten Verbindungsmitteln verbunden sind, wobei der erste Belag (2) mindestens einer der Kondensatoren außerdem von einer elastisch aufgehängten beweglichen Platte gebildet wird und der besagten Kraft in der Weise aussetzbar ist, dass sich die Kapazität mindestens eines der Kondensatoren ($C_1$, $C_2$) ändert, und
- einer Schnittstellenschaltung (5, 7, 9A, 12), die mit dem kapazitiven Aufnehmer (1) verbunden ist, um ein die betreffende Kraft darstellendes Ausgangspotential zu liefern, und die aufweist:

- Integriermittel (5), die auf elektrische Ladungen am Eingang ansprechen, um zwischen ihrem Ausgang (4) und einer Referenzpotentialquelle (dc) das besagte Ausgangspotential ($V_m$) mit einem Wert zu erzeugen, das der Gesamtmenge der elektrischen Ladungen am Eingang proportional ist;
- Mittel ($C_{ph}$) zum Erzeugen mindestens eines periodischen Steuersignals ($Ph_1$, $Ph_2$), das nacheinander einen ersten Zustand, den sogenannten Messzustand, und einen zweiten Zustand, den sogenannten Ladungsübertragungszustand, aufweist;
- umschaltbare Verbindungsmittel (7), die auf den ersten Zustand des Steuersignals ansprechen, um die zweiten Beläge (2a, 2b) auf ein erstes Potential ($V_o$) bzw. ein zweites Potential ($-V_o$) zu bringen, das symmetrisch zu dem ersten Potential ($V_o$) bezüglich des Referenzpotentials (dc) ist, und die ferner auf den zweiten Zustand des Steuersignals ansprechen, um die zweiten Beläge (2a, 2b) auf das Potential des Ausgangs (4) der Integriermittel (5) zu bringen; und
- Ladungsübertragungsmittel (9A) mit Ladungsspeichermitteln ($C_3$), die während einer ($Ph_2$) der Zustände des Steuersignals auf die Integriermittel (5) eine Ladungsmenge übertragen, die die in den ersten Belägen (2) vorhandenen Ladungen darstellen, und die während des anderen ($Ph_1$) Zustandes des Steuersignals dazu gebracht werden, dass sie die Ladungen, die sie vorher gespeichert haben, löschen;

dadurch gekennzeichnet, dass

- der Zustand, während dessen die Ladungsspeichermittel ($C_3$) dazu gebracht werden, ihre Ladungen zu löschen, der erste Zustand ($Ph_1$), der sogenannte Messzustand des Steuersignals ist, und dass
- die Ladungsübertragungsmittel (9A) ferner Mittel ($C_4$, 15-1 bis 15-4) aufweisen, um das Vorzeichen der Ladungsmenge umzukehren, wenn sie auf die Integriermittel (5) übertragen wird.

**2.** Vorrichtung nach Anspruch 1, bei der die Ladungsübertragungsmittel (9A) einen Integrierer (10, C3) mit einem Operationsverstärker (10), dessen invertierender Eingang mit seinem Ausgang (10b) über einen Messkondensator ($C_3$) verbunden ist, sowie einen Übertragungskondensator ($C_4$) aufweisen, der den Ausgang des Operationsverstärkers (10) mit den Integriermitteln (5) verbindet, dadurch gekennzeichnet, dass der Messkondensator ($C_3$) durch ein Umschaltelement (14) überbrückt ist, das ihn während des ersten Zustandes ($Ph_1$) des Steuersignals kurzschließt, und dass der Übertragungskondensator ($C_4$) mit mehreren Umschaltelementen (15-1 bis 15-4) verbunden ist, die es ermöglichen, ihn mit den Eingangsanschlüssen der Integriermittel (5) während des ersten Zustandes ($Ph_1$) des Steuersignals zu verbinden, indem er von dem Integrierer (10, $C_3$) der Übertragungsmittel (9A) isoliert wird, und ihn zwischen den Ausgang (4) der Integriermittel (5) und den Ausgang (10b) des Integrierers der Übertragungsmittel (9A) während des zweiten Zustandes ($Ph_2$) des Steuersignals zu schalten.

**3.** Vorrichtung nach Anspruch 2, dadurch gekennzeichnet, dass die Übertragungsmittel (9A) ferner einen Verschiebungskompensationskondensator ($C_5$) aufweisen, der mit zusätzlichen Umschaltelementen (18-1, 18-2) verbunden ist, die ihn zwischen den invertierenden und nicht-invertierenden Eingang des Operationsverstärkers (10) während des ersten Zustandes ($Ph_1$) des Steuersignals schalten und die ihn mit dem Meßkondensator ($C_3$) während des zweiten Zustandes ($Ph_2$) des Steuersignals in Reihe schalten.

**4.** Vorrichtung nach Anspruch 3, die außerdem ein Kompensationsschaltungselement (12) aufweist, das zwischen die Übertragungsmittel (9A) und die Integriermittel (5) geschaltet ist, um den Einfluß von dem Aufnehmer (1) inhärenten parasitären Kapazitäten zu kompensieren, dadurch gekennzeichnet, dass das Ladungskompensationselement einen Kondensator ($C_c$) aufweist, der während des ersten Zustandes ($Ph_1$) des Steuersignales zu dem Übertragungskondensator ($C_4$) mit einer ersten Polarität parallel geschaltet ist und der während des zweiten Zustandes ($Ph_2$) des Steuersignales zu diesem Übertragungskondensator ($C_4$) mit der umgekehrten Polarität parallel geschaltet ist.

FIG.:1

FIG.:2

FIG.:3A

FIG.:3B

FIG.:4A

FIG.:4B

FIG.:5

FIG.:6A

FIG.:6B

FIG.:7